# DEMANDE DE BREVET EUROPEEN

(11) **EP 1 104 657 A1**
(43) Date de publication de la demande: **06.06.2001**
(21) Numéro de dépôt: 99204041.0
(22) Date de dépôt: 30.11.1999
(51) Int. Cl.: A23L 1/317, A23L 1/314, A23L 1/315, A23L 1/325

(54) **Produit alimentaire reconstitué préemballé**

(71) Demandeur: SOCIETE DES PRODUITS NESTLE S.A., 1800 Vevey (CH)
(72) Inventeur: Laffont, Jérome, 60000 Beauvais (FR); Point, Henri, 95350 Saint-Brice sous Forêt (FR); Valour, Philippe, 60000 Beauvais (FR)
(74) Mandataire: Vuille, Roman

(57) **Abrégé**

on propose un produit alimentaire reconstitué préemballé, comportant une portion prépondérante de matière protéique d'origine animale, caractérisé en ce qu'il possède tout comme son emballage la forme tridimensionnelle d'une pièce de boucherie ou de poissonnerie traditionnelle.

ce produit alimentaire est de préférence surgelé, voir précuit et surgelé ; il peut être consommé après cuisson, respectivement réchauffage, à l'état nu ou dans son emballage d'origine. Il peut être en outre enrichi en nutriments tels que protéines ou calcium.

## Description

L'invention a pour objet un produit alimentaire reconstitué préemballé présentant la forme tridimensionnelle caractéristique d'une pièce de boucherie ou de poissonnerie traditionnelle. L'invention a également pour objet un procédé de fabrication de tels produits.

L'alimentation a pour objectif principal l'apport des nutriments essentiels au maintien de l'organisme, que ce soit en termes d'énergie (lipides, glucides), de construction ou réparation (protéines) ou de santé (eau, vitamines, minéraux).

On constate souvent chez certaines personnes, personnes âgées ou convalescentes par exemple, une difficulté manifeste à s'alimenter dans des conditions optimales, s'agissant du bilan nutritionnel requis ou même de la simple assimilation de produits alimentaires. La difficulté à avaler ou mâcher en est une, et l'on connaît déjà des produits alimentaires reconstitués à base de viande finement coupée ou destructurée tels que pâtés, saucisses ou steaks hachés par exemple.

Selon les besoins, de tels aliments peuvent être parfois supplémentés en nutriments, tels protéines ou minéraux, voire vitamines. C'est notamment le cas des aliments à base essentiellement protéique, c'est à dire viande, poisson, volaille que l'on propose en nutrition hospitalière ou aux personnes âgées.

Si la prise de tels aliments ne pose pas de problème majeur dans ces cas, l'on observe rapidement une lassitude face au choix restreint ainsi offert, ce qui se traduit finalement par une perte d'appétit par simple absence du stimulus organoleptique, visuel voire intellectuel, le plaisir de manger tout compte fait. De fait, un déficit nutritionnel s'établit qui aggrave l'état de santé des personnes considérées.

Le recours à une pièce de boucherie traditionnelle, telle une côtelette, un steak, un filet par exemple peut stimuler l'appétit mais il est alors malaisé de proposer une viande dont le contenu protéique, par exemple,_qui à lui seul suffit à assurer l'apport nutritif souhaité ; souvent en outre, les problèmes de mastication et d'assimilation demeurent.

L'invention a le mérite d'apporter une solution originale aux divers problèmes évoqués ci-dessus en proposant des produits alimentaires reconstitués conservant toute l'attractlvité d'une pièce de boucherie ou de poissonnerie traditionnelle, dont la mastication est adaptée à toutes les situations rencontrées et dont la composition peut être modulée avec suffisamment d'amplitude pour répondre à des besoins nutritionnels particuliers.

Plus précisément l'invention a pour objet un produit alimentaire reconstitué préemballé, comportant une portion prépondérante de matière protéique d'origine animale, caractérisé en ce qu'il possède tout comme son emballage la forme tridimensionnelle d'une pièce de boucherie ou de poissonnerie traditionnelle.

L'invention a également pour objet un procédé de fabrication d'un produit alimentaire tel que défini plus haut, caractérisé en ce que :
a.- on prépare un moule épousant la forme tridimensionnelle d'une pièce de boucherie ou de poissonnerie traditionnelle ;
b.- on remplit ledit moule d'une composition alimentaire liquide, semi-liquide ou pâteuse comportant une portion prépondérante de matière protéique provenant de l'espèce animale dont est issue ladite pièce de boucherie ou de poissonnerie ; et
c.- on scelle le moule ainsi rempli.

Alternativement, selon une autre mise en oeuvre de l'invention, le produit résultant de l'opération de moulage est cuit dans son moule, puis démoulé et finalement emballé séparément.

De façon plus particulière, le produit alimentaire reconstitué selon l'invention, comporte au moins 40, de préférence 50 % en poids de matière protéique, essentiellement de la viande et de préférence de la viande "noble" provenant de l'espèce animale dont est issue la pièce de boucherie ou poissonnerie, boeuf, porc, agneau, volaille ou poissons divers par exemple. Il peut être en outre enrichi sur le plan nutritionnel, par rapport à la matière alimentaire, viande plus particulièrement, dont est issue l'espèce animale considérée. Une telle supplémentation peut consister en protéines d'origines diverses, en minéraux tels que calcium, fer ou étain par exemple ou en vitamines.

On peut ainsi proposer des produits à base de viande dont le bilan protéique ou calcique ne peut pas être atteint à l'aide d'une pièce de boucherie ou de poissonnerie traditionnelle.

Le produit alimentaire reconstitué peut en outre contenir des additifs alimentaires tels que agents liants, texturants, colorants, stabilisants ou aromatisants.

Le détail de la composition de tels produits sera donné dans les exemples.

La préparation de produits alimentaires reconstitués selon l'invention consiste à premièrement façonner un moule reproduisant à l'identique la pièce de boucherie ou de poissonnerie traditionnelle souhaitée, côtelette, tranche ou steak, filet de volaille, darne ou filet de poisson par exemple. Les techniques actuelles sont quasi sans limitation aucune et les matériaux disponibles conviennent parfaitement bien à la confection d'emballages conformes aux normes alimentaires applicables.

une fols le moule, ou la série de moules, prêt on le remplit à l'aide d'une composition alimentaire liquide, semi-liquide ou pâteuse dûment choisie en fonction de la nature de l'aliment à reconstituer, pour l'essentiel à base de viande et des autres nutriments de base. L'opération de remplissage s'effectue à l'aide des instruments usuel en industrie alimentaire, sur une chaîne de remplissage par exemple. Selon l'option choisie, le moule ainsi rempli est alors scellé hermétiquement pour être ensuite conditionné, par exemple surgelé.

Selon une alternative mentionnée précédemment, le moule dûment rempli peut être soumis à une opération de cuisson (four, vapeur, ...) ensuite démoulé et finalement réemballé et conditionné de manière appropriée, de préférence surgelé, en vrac ou en portion individuelle.

Le produit alimentaire ainsi reconstitué surgelé peut être alors consommé après cuisson (four, vapeur, bain-marie, ...) dans son emballage d'origine, celle-ci donnant lieu à l'obtention d'une forme identique à celle de la pièce de boucherie ou poissonnerie traditionnelle que l'on souhaitait reproduire. Si le produit en question est précuit un simple réchauffage ou décongélation suffit.

Alternativement, le produit reconstitué surgelé peut être cuit hors de son emballage, au four, à la vapeur ou dans un jus ou une sauce appropriée par exemple. Les additifs alimentaires disponibles permettent également de garantir la rétention de la forme souhaitée dans de telles conditions.

L'invention est illustrée, de manière non limitative, par les exemples ci-dessous.

### Exemple 1

On prépare une émulsion à base de viande de porc enrichie en protéines sériques (19 %) à partir des ingrédients suivants (parties en poids) :

| | |
|---|---|
| Viande de porc 50% gras | 323 |
| Noix d'épaule de porc parée | 200 |
| Protéines sériques 80%(Lacprodan-80) | 190 |
| crème laitière pasteurisée 35% mat. gr. | 180 |
| Poivre blanc en poudre | 1 |
| Arôme de porc rôti | 18 |
| Blanc d'oeuf liquide 10% | 70 |
| source de calcium (31-34 %) | 15 |
| Sel | 3 |
| Total ingrédients | 1000 |

Outre les 19 % de protéines ajoutés, le mélange est également enrichi en calcium.

une fois les ingrédients ci-dessus dûment mélangés et travaillés, l'émulsion résultante est dosée en portions de 100 g chacune dans un moule en homo- ou copolymère de type PP/PA/PE représentant la forme d'une côtelette de porc. Le moule unitaire ainsi rempli est ensuite surgelé.

### Exemple 2

On prépare une émulsion à base de poissons et fruits de mer enrichie en protéines sériques (17 %) à partir des ingrédients suivants (parties en poids) :

| | |
|---|---|
| Echalotes suées | 17 |
| Chutes de saumon | 220 |
| Sel | 10 |
| source de calcium (31-34 %) | 15 |
| Protéines sériques 80%(Lacprodan-80) | 170 |
| crème laitière pasteurisée 35% mat. gr. | 170 |
| Colin d'Alaska | 190 |
| Poivre blanc en poudre | 1 |
| Arôme de saumon frais | 35 |
| Calamars géants | 170 |
| Poudre de jus de betterave rouge | 1.8 |
| Total ingrédients | 1000 |

Outre les 17 % de protéines ajoutés, le mélange est également enrichi en calcium.

une fois les ingrédients ci-dessus dûment mélangés et travaillés, l'émulsion résultante est dosée en portions de 100 g chacune dans un moule en homo- ou copolymère de type PP/PA/PE représentant la forme d'une darne de saumon. Le moule unitaire ainsi rempli est ensuite surgelé.

### Exemple 3

On prépare une émulsion à base poulet, enrichie en protéines sériques (env. 19 %) à partir des Ingrédients suivants (parties en poids) :

| | |
|---|---|
| crème laitière pasteurisée 35% mat. gr. | 180 |
| Poivre blanc en poudre | 1 |
| Arôme de poulet rôti renforcé | 29 |
| source de calcium (31-34 %) | 15 |
| Protéines sériques 80%(Lacprodan-80) | 185 |
| Viande de poulet avec peau | 520 |
| Blanc d'oeuf liquide 10% | 70 |
| Total ingrédients | 1000 |

Outre les 19 % de protéines ajoutés, le mélange est également enrichi en calcium

Une fois les Ingrédients ci-dessus dûment mélangés et travaillés, l'émulsion résultante est dosée en portions de 100 g chacune dans un moule en homo- ou copolymère de type PP/PA/PE présentant la forme d'un filet de poulet. Le moule unitaire ainsi rempli est ensuite surgelé.

### Exemple 4

On prépare une émulsion à base de viande de boeuf enrichie en protéines sériques (env. 13 %) à partir des ingrédients suivants (parties en poids) :

| | |
|---|---|
| Jarret de boeuf | 534 |
| Protéines sériques 80%(Lacprodan-80) | 128 |
| Sel | 7 |
| Poivre blanc en poudre | 1 |
| Blanc d'oeuf liquide 10% | 80 |
| Crème laitière pasteurisée 35% mat. gr. | 213 |
| Arôme de viande rôtie (boeuf) | 22 |
| Source de calcium (31-34 %) | 15 |
| Total ingrédient | 1000 |

Outre les 13 % de protéines ajoutés, le mélange est également enrichi en sel de calcium

une fois les ingrédients ci-dessus dûment mélangés et travaillés, l'émulsion résultante est dosée en portions de env. 20 g chacune dans une série de moules unitaires en homo- ou copolymère de type PP/PA/PE avant une forme de type cubique, rappelant les morceaux de viande caractéristiques utilisés pour la préparation d'un boeuf bourguignon. L'ensemble de moules unitaires ainsi remplis est ensuite surgelé.

## Revendications

1. Produit alimentaire reconstitué préemballé, comportant une portion prépondérante de matière protéique d'origine animale, caractérisé en ce qu'il possède tout comme son emballage la forme tridimensionnelle d'une pièce de boucherie ou de poissonnerie traditionnelle.

2. Produit alimentaire selon la revendication 1, caractérisé en ce qu'il comporte au moins 40 % en poids de matière protéique provenant de l'espèce animale dont est issue ladite pièce de boucherie ou de poissonnerie.

3. Produit alimentaire selon l'une des revendications précédentes, caractérisé en ce qu'il se présente à l'état surgelé, respectivement précuit surgelé.

4. Produit alimentaire selon l'une des revendications précédentes, caractérisé en ce qu'il peut être consommé après cuisson, recuisson, décongélation ou réchauffage dans son emballage.

5. Produit alimentaire selon l'une des revendications précédentes, caractérisé en ce qu'il est enrichi sur le plan nutritionnel par rapport à la matière alimentaire dont est issue l'espèce animale considérée.

6. Produit alimentaire selon l'une des revendications précédentes, caractérisé en ce qu'il est enrichi en protéines et en calcium par rapport à la matière alimentaire dont est issue l'espèce animale considérée.

7. Produit alimentaire selon l'une des revendications précédentes, caractérisé en ce qu'il comprend outre les composants nutritionnels de base, des agents liants, des agents texturants, des agents colorants, des agents aromatisants, des agents stabilisants, des vitamines ou des minéraux.

8. Procédé de fabrication d'un produit alimentaire reconstitué préemballé selon la revendication 1, caractérisé en ce que :
a.- on prépare un moule épousant la forme tridimensionnelle d'une pièce de boucherie ou de poissonnerie traditionnelle ;
b.- on remplit ledit moule d'une composition alimentaire liquide, semi-liquide ou pâteuse comportant une portion prépondérante de matière protéique provenant de l'espèce animale dont est issue ladite pièce de boucherie ou de poissonnerie ; et
c.- on scelle le moule ainsi rempli.

9. Procédé de fabrication d'un produit alimentaire reconstitué préemballé selon la revendication 1, caractérisé en ce que :
a.- on prépare un moule épousant la forme tridimensionnelle d'une pièce de boucherie ou de poissonnerie traditionnelle ;
b.- on remplit ledit moule d'une composition alimentaire liquide, semi-liquide ou pâteuse comportant une portion prépondérante de matière protéique provenant de l'espèce animale dont est issue ladite pièce de boucherie ou de poissonnerie ;
c.- on cuit la composition alimentaire dans son moule ; et
d.- on démoule le produit résultant de la cuisson pour l'emballer séparément.

10. Procédé selon l'une des revendications 8 et 9, caractérisé en ce que le produit alimentaire ainsi obtenu est surgelé.

11. Procédé selon l'une des revendications 8 à 10, caractérisé en ce que la composition déposée dans le moule comporte au moins 50 % en poids de matière protéique provenant de l'espèce animale dont est issue ladite pièce de boucherie ou de poissonnerie.

12. Procédé selon l'une des revendications 8 à 11, caractérisé en ce que la composition déposée dans le moule, comprend outre les composants nutritionnels de base, des agents liants, des agents texturants, des agents colorants, des agents aromatisants, des agents stabilisants, des vitamines ou des minéraux.
